# EUROPEAN PATENT APPLICATION

(11) **EP 4 123 329 A1**
(43) Date of publication of application: **25.01.2023**
(21) Application number: 22178128.9
(22) Date of filing: 09.06.2022
(51) Int. Cl.: G01S 5/00, G01S 5/02

(54) **METHOD AND APPARATUS FOR WIRELESS LOCALIZATION**

(30) Priority: 20.07.2021 US 202117381150
(71) Applicant: NXP B.V., 5656 AG Eindhoven (NL)
(72) Inventor: WARNEZ, Dimitri, 5656AG Eindhoven (NL); JOGI, Sunil Dilipkumar, 5656AG Eindhoven (NL)
(74) Representative: Krott, Michel

(57) **Abstract**

Embodiments of a method and an apparatus for wireless localization are disclosed. In an embodiment, a method for wireless localization involves obtaining, by an Ultra-Wideband (UWB) radio of a localization device, UWB timing data from UWB anchors, transmitting, via a non-UWB transceiver of the localization device, the UWB timing data to a localization engine, and determining, by the localization engine, a location of the localization device using the UWB timing data.

## Description

### BACKGROUND

In wireless localization, localization devices can obtain and transmit information related to a location of a device through a real-time location system (RTLS) to perform various functions. For example, the location of localization devices may be used to provide navigation, display location, unlock other external devices, etc. To obtain an accurate location of a localization device in an RTLS, the localization device may use Ultra-Wideband (UWB) communications. However, if the localization device lacks certain localization functionalities, then the localization device is not able to determine the location of the localization device using UWB communications.

### SUMMARY

Embodiments of a method and an apparatus for wireless localization are disclosed. In an embodiment, a method for wireless localization involves obtaining, by an Ultra-Wideband (UWB) radio of a localization device, UWB timing data from UWB anchors, transmitting, via a non-UWB transceiver of the localization device, the UWB timing data to a localization engine, and determining, by the localization engine, a location of the localization device using the UWB timing data.

In an embodiment, the UWB radio of the localization device communicates with the UWB anchors using a UWB wireless protocol and obtains the UWB timing data via at least one blink packet transmitted by the UWB anchors using the UWB wireless protocol.

In an embodiment, the non-UWB transceiver of the localization device communicates with the localization engine using a non-UWB wireless protocol.

In an embodiment, the UWB radio of the localization device communicates with the UWB anchors using a UWB wireless protocol and obtains the UWB timing data via at least one blink packet transmitted by the UWB anchors using the UWB wireless protocol, and where the non-UWB transceiver of the localization device communicates with the localization engine using a non-UWB wireless protocol and transmits the UWB timing data to the localization engine using the non-UWB wireless protocol.

In an embodiment, the localization engine is implemented in a personal communications device that displays the location of the localization device via at least one of a user interface (UI) and a graphic user interface (GUI).

In an embodiment, the localization engine is implemented in a server that transmits location data to a personal communications device, and where the personal communications device displays the location of the localization device via at least one of a UI and a GUI in response to the location data.

In an embodiment, the localization engine transmits location data to the non-UWB transceiver of the localization device in response to the UWB timing data transmitted by the localization device, and where the localization device determines a function to be performed in response to the location data transmitted by the localization engine.

In an embodiment, the function to be performed by the localization device is at least one of an unlocking operation and a locking operation.

An embodiment of a real-time location system (RTLS) is also disclosed. The RTLS includes UWB anchors configured to provide UWB timing data, a localization device including a UWB radio and a non-UWB transceiver and configured to obtain UWB timing data from the UWB anchors via the UWB radio, and to transmit the UWB timing data via the non-UWB transceiver, and a localization engine configured to receive the UWB timing data from the non-UWB transceiver of the localization device, and to determine a location of the localization device in response to the UWB timing data.

In an embodiment, the UWB radio of the localization device communicates with the UWB anchors using a UWB wireless protocol and obtains the UWB timing data via at least one blink packet transmitted by the UWB anchors using the UWB wireless protocol.

In an embodiment, the non-UWB transceiver of the localization device communicates with the localization engine using a non-UWB wireless protocol.

In an embodiment, the UWB radio of the localization device communicates with the UWB anchors using a UWB wireless protocol and obtains the UWB timing data via at least one blink packet transmitted by the UWB anchors using the UWB wireless protocol, and where the non-UWB transceiver of the localization device communicates with the localization engine using a non-UWB wireless protocol and transmits the UWB timing data to the localization engine using the non-UWB wireless protocol.

In an embodiment, the localization engine is implemented in a personal communications device that displays the location of the localization device via at least one of a UI and a GUI.

In an embodiment, the localization engine is implemented in a server that transmits location data to a personal communications device, and where the personal communications device displays the location of the localization device via at least one of a UI and a GUI in response to the location data.

In an embodiment, the localization engine transmits location data to the non-UWB transceiver of the localization device in response to the UWB timing data transmitted by the localization device, and where the localization device determines a function to be performed in response to the location data transmitted by the localization engine.

In an embodiment, the function to be performed by the localization device is at least one of an unlocking operation and a locking operation.

An embodiment of a localization device is also disclosed. The localization device includes a UWB radio configured to obtain UWB timing data from UWB anchors, a non-UWB transceiver configured to transmit the UWB timing data to a localization engine that can determine a location of the localization device in response to the UWB timing data and means for providing the UWB timing data to the non-UWB transceiver from the UWB radio.

In an embodiment, the UWB radio of the localization device communicates with the UWB anchors using a UWB wireless protocol and obtains the UWB timing data via at least one blink packet transmitted by the UWB anchors using the UWB wireless protocol.

In an embodiment, the non-UWB transceiver of the localization device communicates with the localization engine using a non-UWB wireless protocol.

In an embodiment, the UWB radio of the localization device communicates with the UWB anchors using a UWB wireless protocol and obtains the UWB timing data via at least one blink packet transmitted by the UWB anchors using the UWB wireless protocol, and where the non-UWB transceiver of the localization device communicates with the localization engine using a non-UWB wireless protocol and transmits the UWB timing data to the localization engine using the non-UWB wireless protocol.

Other aspects in accordance with the invention will become apparent from the following detailed description, taken in conjunction with the accompanying drawings, illustrated by way of example of the principles of the invention.

### BRIEF DESCRIPTION OF THE DRAWINGS

Fig. 1 depicts an example of a real-time location system (RTLS) that is used for wireless localization.
Fig. 2 depicts an example of an RTLS where the functionalities needed for wireless localization are distributed amongst multiple components in accordance with an embodiment of the invention.
Fig. 3 depicts another example of an RTLS where the functionalities needed for wireless localization are distributed amongst multiple components in accordance with an embodiment of the invention.
Fig. 4 depicts another example of an RTLS where the functionalities needed for wireless localization are distributed amongst multiple components in accordance with an embodiment of the invention.
Fig. 5A depicts an example of an RTLS where distribution of the functionalities needed for wireless localization are enabled by an Ultra-Wideband (UWB) radio and by a non-UWB radio in accordance with an embodiment of the invention.
Fig. 5B depicts another example of an RTLS where distribution of the functionalities needed for wireless localization are enabled by a UWB radio and by a non-UWB radio in accordance with an embodiment of the invention.
Fig. 6 depicts an example of a system that may be used by a localization device in an RTLS for wireless localization in accordance with an embodiment of the invention.
Fig. 7 depicts an example of a localization device that may be used in an RTLS for wireless localization in accordance with an embodiment.
Fig. 8 illustrates a flow diagram of a technique for wireless localization in accordance with an embodiment of the invention.

Throughout the description, similar reference numbers may be used to identify similar elements.

### DETAILED DESCRIPTION

It will be readily understood that the components of the embodiments as generally described herein and illustrated in the appended figures could be arranged and designed in a wide variety of different configurations. Thus, the following more detailed description of various embodiments, as represented in the figures, is not intended to limit the scope of the present disclosure but is merely representative of various embodiments. While the various aspects of the embodiments are presented in drawings, the drawings are not necessarily drawn to scale unless specifically indicated.

The present invention may be embodied in other specific forms without departing from its spirit or essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

Localization systems often make use of satellite signals. For example, the global positioning system (GPS) is a satellite-based radio navigation system that provides geolocation, positioning, and time information to GPS receivers embedded in, connected to, or attached to, localization devices (e.g., personal communication devices, laptops, vehicles, tags, dongles, fobs, etc.). Such systems can determine the geographic location of stationary and/or moving objects. When embedded in, connected to, or attached to localization devices, GPS receivers can, for example, enable a navigation system. However, such localization systems may lack accuracy, stability, and operability in environments where GPS signaling is more difficult such as, for example, inside buildings.

To improve accuracy, stability, and operability in environments where GPS signaling may be difficult, a real-time location system (RTLS) may be deployed. An RTLS provides accurate device localization and enables precise navigational capabilities via Ultra-Wideband (UWB) communications. However, for the RTLS to communicate via UWB communications, several functionalities described herein may be needed. In some embodiments, a first functionality may involve a localization device of an RTLS obtaining UWB data (e.g., UWB timing data and/or location data) from a UWB infrastructure. As an example, the UWB infrastructure may include UWB anchors that wirelessly communicate with the localization device. In some embodiments, a second functionality may involve the localization device of the RTLS using the UWB data in a localization engine to determine the location of the localization device. In some embodiments, a third functionality may involve using the location of the localization device. For example, the location of the localization device may be used to display the location of the localization device on a map via a user interface (UI) or a graphical user interface (GUI). As another example, the location of the localization device may be used to trigger a function such as, for example, an unlocking operation or a locking operation in response to the location of the localization device.

As described herein, "UWB communications" may refer to a radio technology that can use a very low energy level for short-range, high-bandwidth communication over a large portion of the radio spectrum. In addition, UWB may refer to a technology for transmitting information spread over a large bandwidth (e.g., approximately 500 MHz or greater than 500 MHz). In some embodiments, UWB may be defined as wireless transmission for which an emitted signal bandwidth exceeds the lesser of 500 MHz or 20% of the arithmetic center frequency. In some embodiments, UWB communications may involve the transmission of information by generating electronic energy at a radio frequency at specific time intervals and occupying a large bandwidth, thus enabling pulse-position or time modulation. A UWB (radio frequency (RF)) ranging system may also employ a Time-of-Flight principle to determine the distance between a localization device, a personal communications device, and/or UWB anchors. In some embodiments, a transceiver's transmitter (associated with the localization device) sends out a waveform, commonly a chirp or a pulse, which is either reflected by an object or retransmitted by a second transceiver. Based on the amount of time it takes for the reflection or retransmission to reach the originating transceiver's receiver, the distance between the objects can be calculated. The calculated distance between the receiver and the transmitter may then be used to determine a location, such that the location may be used to perform further localization-related functions.

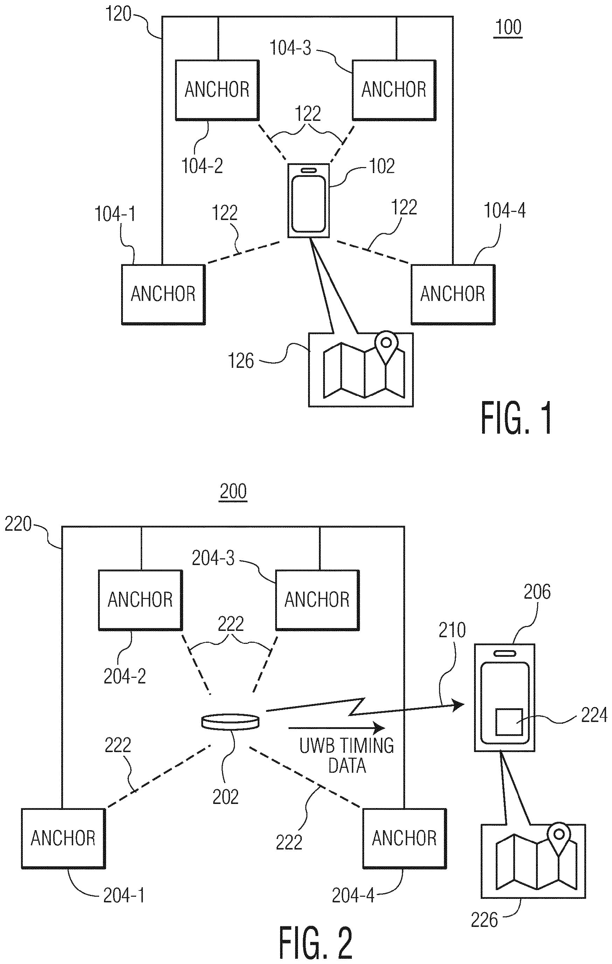

Fig. 1 depicts an example of an RTLS, 100, that is used for wireless localization. In the embodiment depicted in Fig. 1, the RTLS 100 includes a localization device 102 that wirelessly communicates with four UWB anchors (anchor 104-1, anchor 104-2, anchor 104-3, and anchor 104-4). The RTLS can be used in various applications, such as industrial applications, medical applications, computer applications, and/or consumer or enterprise applications. In some embodiments, the RTLS is a wireless localization system, such as a wireless localization system compatible with an Institute of Electrical and Electronics Engineers (IEEE) 802.15.4 protocol. For example, the RTLS may be a wireless localization system compatible with the IEEE 802.15.4z protocol. Although the RTLS 100 is shown in Fig. 1 with certain components and described with certain functionality herein, other embodiments of the RTLS may include fewer or more components to implement the same, less, or more functionality. In another example, although the RTLS is shown in Fig. 1 as being connected in a certain topology, the network topology of the RTLS is not limited to the topology shown in Fig. 1.

In the embodiment depicted in Fig. 1, the localization device 102 may be a mobile device (e.g., phone, smartwatch, tablet, laptop, etc.). In addition, the localization device 102 may be a UWB enabled device, such that a UWB radio and a localization engine are implemented in the localization device 102. The UWB radio and/or the localization engine of the localization device 102 may be implemented in hardware (e.g., circuits), software, firmware, or a combination thereof. The UWB radio and/or the localization engine of the localization device 102 may be fully or partially implemented as an integrated circuit (IC) device. In some embodiments, the UWB radio and/or the localization engine may be compatible with at least one UWB wireless protocol (e.g., at least one IEEE 802.15.4 protocol). For example, the UWB radio and/or the localization engine may be compatible with the IEEE 802.15.4z protocol. In some embodiments, the UWB radio is a wireless UWB radio that wirelessly connects to UWB anchors, for example, through one or more UWB wireless protocols, such as the IEEE 802.15.4 protocol. In some embodiments, the UWB radio includes at least one antenna, at least one transceiver operably connected to the at least one antenna, and at least one controller operably connected to the corresponding transceiver. In some embodiments, the at least one transceiver includes a physical layer (PHY) device. The at least one controller may be configured to control the at least one transceiver to process received packets (e.g., blink packets) through the at least one antenna. In some embodiments, the at least one controller is implemented within a processor, such as a microcontroller (MCU), a host processor, a host, a digital signal processor (DSP), or a central processing unit (CPU), which can be integrated in a corresponding transceiver.

In the embodiment depicted in Fig. 1, the UWB anchors (e.g., anchor 104-1, anchor 104-2, anchor 104-3, and anchor 104-4) can be associated with (e.g., connected to) a localization device (e.g., localization device 102) and that may communicate with the localization device via UWB communications. An example of a UWB anchor may include, but is not limited to, a beacon, a node, a marker, etc. Although the RTLS 100 is shown in Fig. 1 as including four anchors, other embodiments of the RTLS may include three anchors or more than four anchors. In addition, a UWB anchor may be a unidirectional communication device or a bidirectional communication device. In such an embodiment, the UWB anchors (e.g., anchor 104-1, anchor 104-2, anchor 104-3, and anchor 104-4) may each be connected via a network 120. The network 120 may involve each of the UWB anchors in the RTLS 100 being connected through, for example, ethernet and/or Wi-Fi to enable anchor synchronization. Anchor synchronization allows the RTLS 100 to exchange time-specific data (e.g., UWB timing data) which may further be used to provide an accurate, real-time location of the localization device 102. In such an embodiment, the UWB anchors may be connected (e.g., wirelessly connected) to the UWB radio of the localization device 102 using a UWB wireless protocol (illustrated by dashed lines 122), such that the UWB radio may obtain UWB timing data via at least one blink packet transmitted by each of the UWB anchors using the UWB wireless protocol. For example, each of the UWB anchors may transmit a blink packet that includes information corresponding to the respective UWB anchor.

With reference to Fig. 1, the localization device 102 may perform each of the functionalities needed for wireless localization in an RTLS. For example, the UWB radio of the localization device may obtain UWB timing data from the UWB anchors, the localization engine may use the UWB timing data to determine the location of the localization device 102, and the location of the localization device 102 may be used by the localization device, e.g., to display the location of the localization device via a UI (shown by mapping image 126) or to determine a function to be performed. In such an embodiment, the localization device 102 determines its own location using UWB communications and UWB timing data that the localization device captures from the UWB anchors. Consequently, when the localization device lacks one or more of the functionalities needed for wireless localization, the RTLS may be unable to perform wireless localization. In addition, because a localization device may lack UWB capability, computing power, and/or a UI, it may not be possible to implement each of the functionalities using a single device.

In accordance with an embodiment of the invention, a technique for wireless localization may involve obtaining, by a UWB radio of a localization device, UWB timing data from UWB anchors, transmitting, via a non-UWB transceiver of the localization device, the UWB timing data to a localization engine, and determining, by the localization engine, a location of the localization device using the UWB timing data. Thus, techniques described herein may enable wireless localization in an RTLS where a localization device lacks at least one of the features needed for wireless localization by distributing the functionalities needed for wireless localization in the RTLS amongst multiple components. Distributing the functionalities needed to implement wireless localization in an RTLS amongst multiple components can improve implementation of wireless localization.

In embodiments described herein, a "localization device" may be implemented as part of a mobile device (e.g., phone, smartwatch, tablet, laptop, etc.). In some embodiments, localization devices may establish communication with UWB anchor devices using a UWB wireless protocol and with localization engines using a non-UWB wireless protocol. Examples of devices in which a localization device may be implemented include, but are not limited to, a mobile phone, a tag, a token, a key, a puck, a key fob, etc. In addition, examples of the non-UWB wireless protocol may include, but are not limited to, Long Term Evolution (LTE), Bluetooth Low Energy (BLE), Wi-Fi, cellular, etc.

In embodiments described herein, a "localization engine" may be implemented in a personal communications device, in a server (e.g., a cloud-based server), or in some other computing systems. In some embodiments, localization engines may establish communication with localization devices and/or personal communication devices (e.g., phones, smartwatches, laptops, tablets, etc.) using a non-UWB wireless protocol. In some embodiments, the localization engine may be a remote localization engine that may establish communication with localization devices and/or personal communication devices using the non-UWB wireless protocol. Examples of personal communications devices include, but are not limited to, a mobile phone, a smartwatch, a laptop, a tablet, etc.

Examples of an RTLS where the functionalities needed for wireless localization are distributed amongst multiple components are described in further detail below with reference to Fig. 2, Fig. 3, and Fig. 4.

Fig. 2 depicts an example of an RTLS, 200, where the functionalities needed for wireless localization are distributed amongst multiple components in accordance with an embodiment of the invention. In particular, Fig. 2 depicts a localization device 202, UWB anchors (anchor 204-1, anchor 204-2, anchor 204-3, and anchor 204-4), and a localization engine 224 implemented in a personal communications device 206. With reference to Fig. 2, the localization device 202 may include a UWB radio (not shown) that communicates with the UWB anchors using a UWB wireless protocol (illustrated by dashed lines 222) and a non-UWB radio (not shown) that communicates with the localization engine 224 using a non-UWB wireless protocol (illustrated by arrow 210) (e.g., LTE, BLE, Wi-Fi, cellular, etc.).

In an embodiment, the UWB anchors (e.g., anchor 204-1, anchor 204-2, anchor 204-3, and anchor 204-4) may each be connected via a network 220 and may be used by the UWB radio of the localization device 202 to obtain UWB timing data from the UWB anchors via at least one blink packet. As an example, a blink packet may be an identifiable UWB packet in accordance with an IEEE 802.15.4 standard and/or a data packet that includes information related to location, time, etc. In some embodiments, the at least one blink packet may be transmitted by each of the UWB anchors to the UWB radio of the localization device 202 using the UWB wireless protocol. For example, each of the UWB anchors may transmit a blink packet that includes information (e.g., transmission time information) corresponding to the respective UWB anchor. In such an example, the time of reception of blink packets from UWB anchors at the localization device (e.g., localization device 202) may be recorded as timestamps, such that multiple blink packets from different UWB anchors may be used for Time-of-Flight calculations. In such an embodiment, the localization device 202 has an interface (e.g., Serial Peripheral Interface (SPI), Inter-Integrated Circuit (I2C), or other types of interfaces) configured to provide the UWB timing data to the non-UWB radio from the UWB radio, such that the UWB timing data (illustrated as UWB timing data) may be transmitted via the non-UWB radio of the localization device 202 to the localization engine 224 implemented in the personal communications device 206 using the non-UWB wireless protocol. The localization engine 224 implemented in the personal communications device 206 may then determine a location of the localization device 202 using the UWB timing data. As an example, the location determined by the localization engine 224 may indicate the location of the personal communications device 206 relative to the localization device 202. As another example, the location determined by the localization engine 224 may indicate an absolute location of the localization device 202. In an embodiment, the personal communications device 206 may use the location of the localization device 202 to determine a function to be performed. For example, the personal communications device 206 may display the location of the localization device 202 via a UI or a GUI, such that the location may be shown on a map (shown by mapping image 226) or implemented via another navigational interface.

With reference to Fig. 2, the functionalities needed for wireless localization are distributed amongst components of the RTLS 200 as described herein. In an embodiment, the localization device 202 performs a first functionality, in which UWB timing data is obtained by the UWB radio of the localization device 202 from the UWB anchors. In addition, in such an embodiment, the localization engine 224 implemented in the personal communications device 206 performs a second functionality and a third functionality. According to the second functionality, the localization engine 224 implemented in the personal communications device 206 uses the UWB timing data to determine the location of the localization device 202. According to the third functionality, the personal communications device 206 uses the location determined by the localization engine 224 to display the location of the localization device 202 via the UI or the GUI. In addition, other uses of the location may be possible.

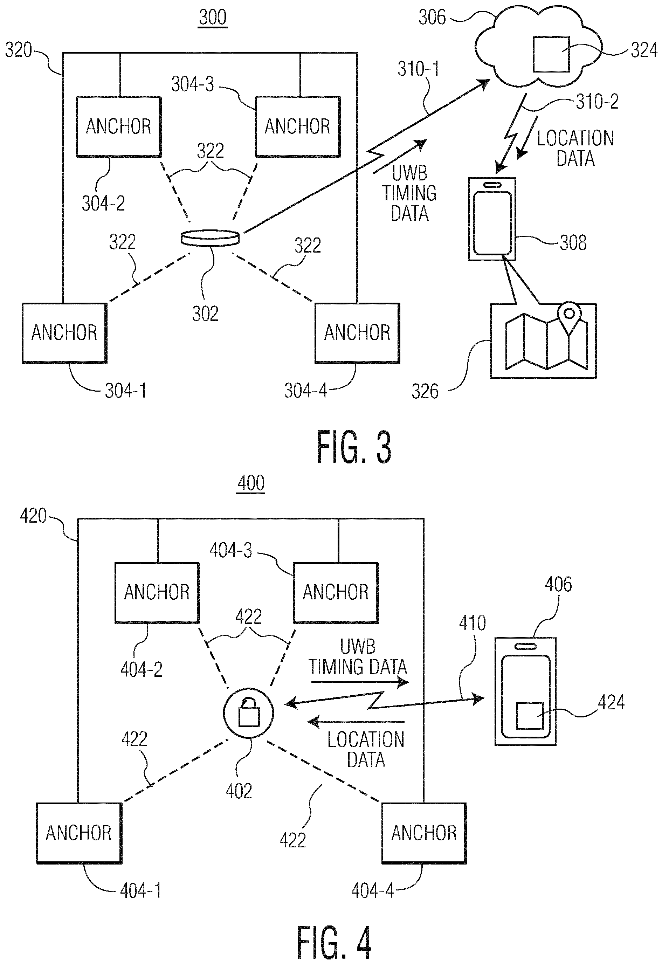

Fig. 3 depicts another example of an RTLS, 300, where the functionalities needed for wireless localization are distributed amongst multiple components in accordance with an embodiment of the invention. In particular, Fig. 3 depicts a localization device 302, UWB anchors (anchor 304-1, anchor 304-2, anchor 304-3, and anchor 304-4), a localization engine 324 implemented in a server (e.g., cloud-based server) 306, and a personal communications device 308. With reference to Fig. 3, the localization device 302 may include a UWB radio (not shown) that communicates with the UWB anchors using a UWB wireless protocol (illustrated by dashed lines 322) and a non-UWB radio (not shown) that communicates with the localization engine 324 using a non-UWB wireless protocol (illustrated by arrow 310-1). In addition, the localization engine 324 implemented in the server 306 may communicate with the personal communications device 308 using another non-UWB wireless protocol (illustrated by arrow 310-2). Examples of the non-UWB wireless protocols may include LTE, BLE, Wi-Fi, cellular, and/or some other intermediate proxy such as, for example, a mobile phone.

In an embodiment, the UWB anchors (e.g., anchor 304-1, anchor 304-2, anchor 304-3, and anchor 304-4) may each be connected via a network (e.g., ethernet or Wi-Fi) 320 and may be used by the UWB radio of the localization device 302 to obtain UWB timing data from the UWB anchors via at least one blink packet. In some embodiments, the at least one blink packet may be transmitted by the UWB anchors to the UWB radio of the localization device 302 using the UWB wireless protocol. For example, each of the UWB anchors may transmit a blink packet that includes information corresponding to the respective UWB anchor. In an embodiment, the localization device 302 has an interface (e.g., SPI, I2C, or other types of interfaces) configured to provide the UWB timing data to the non-UWB radio from the UWB radio, such that the UWB timing data (illustrated as UWB timing data) may be transmitted via the non-UWB radio of the localization device 302 to the localization engine 324 implemented in the server 306 using the non-UWB wireless protocol.

The localization engine 324 implemented in the server 306 may then determine a location of the localization device 302 using the UWB timing data and transmit location data (illustrated as location data) to the personal communications device 308 using the other non-UWB wireless protocol (illustrated by arrow 310-2). As an example, the location data transmitted by the localization engine 324 may indicate the location of the localization device 302 relative to the personal communications device 308. As another example, the location determined by the localization engine 324 may indicate an absolute location of the localization device 302. In an embodiment, the personal communications device 308 may use the location of the localization device 302 to determine a function to be performed. For example, the personal communications device 308 may display the location of the localization device 302 via a UI or a GUI in response to the location data, such that the location may be shown on a map (shown by mapping image 326) or implemented via another navigational interface.

With reference to Fig. 3, the functionalities needed for wireless localization are distributed amongst components of the RTLS 300 as described herein. In an embodiment, the localization device 302 performs a first functionality, in which UWB timing data is obtained by the UWB radio of the localization device 302 from the UWB anchors. In an embodiment, the localization engine 324 implemented in the server 306 performs a second functionality, in which the UWB timing data is used to determine the location of the localization device 302. In addition, in such an embodiment, the personal communications device 308 performs a third functionality, in which the location determined by the localization engine 324 is used by the personal communications device 308 to display the location of the localization device 302 via the UI or the GUI. In addition, other uses of the location may be possible.

Fig. 4 depicts another example of an RTLS, 400, where the functionalities needed for wireless localization are distributed amongst multiple components in accordance with an embodiment of the invention. In particular, Fig. 4 depicts a localization device 402, UWB anchors (anchor 404-1, anchor 404-2, anchor 404-3, and anchor 404-4), and a localization engine 424 implemented in a personal communications device 406. With reference to Fig. 4, the localization device 402 may include a UWB radio (not shown) that communicates with the UWB anchors using a UWB wireless protocol (illustrated by dashed lines 422) and a non-UWB radio (not shown) that communicates with the localization engine 424 using a non-UWB wireless protocol (illustrated by arrow 410) (e.g., LTE, BLE, Wi-Fi, cellular, etc.).

In an embodiment, the UWB anchors (e.g., anchor 404-1, anchor 404-2, anchor 404-3, and anchor 404-4) may each be connected via a network 420 and may be used by the UWB radio of the localization device 402 to obtain UWB timing data from the UWB anchors via at least one blink packet. In some embodiments, the at least one blink packet may be transmitted by the UWB anchors to the UWB radio of the localization device 402 using the UWB wireless protocol. For example, each of the UWB anchors may transmit a blink packet that includes information corresponding to the respective UWB anchor. In an embodiment, the localization device 402 has an interface (e.g., SPI, I2C, or other types of interfaces) configured to provide the UWB timing data to the non-UWB radio from the UWB radio, such that the UWB timing data (illustrated as UWB timing data) may be transmitted via the non-UWB radio of the localization device 402 to the localization engine 424 implemented in the personal communications device 406 using the non-UWB wireless protocol.

In an embodiment, the localization engine 424 implemented in the personal communications device 406 may then determine a location of the localization device 402 using the UWB timing data and transmit location data (illustrated as location data) to the non-UWB radio of the localization device 402 in response to the UWB timing data transmitted by the localization device 402. In such an embodiment, the localization engine 424 implemented in the personal communications device 406 may transmit the location data to the non-UWB radio of the localization device 402 using the non-UWB wireless protocol (illustrated by arrow 410). As an example, the location data transmitted by the localization engine 424 may indicate the location of the personal communications device 406 relative to the localization device 402. As another example, the location determined by the localization engine 424 may indicate an absolute location of the localization device 402. In an embodiment, the localization device 402 may determine a function to be performed in response to the location and/or location data transmitted by the localization engine 424. For example, the functioned to be performed by the localization device 402 may be an unlocking operation or a locking operation. In such an example, the unlocking operation or the locking operation may be performed if the localization engine 424 is brought to a certain location, e.g., near the localization device 402. The unlocking operation or the locking operation may involve, e.g., unlocking/locking a bike lock, an automotive vehicle, a door, and/or other lock-enabled devices.

With reference to Fig. 4, the functionalities needed for wireless localization are distributed amongst components of the RTLS 400 as described herein. In an embodiment, the localization device 402 performs a first functionality, in which UWB timing data is obtained by the UWB radio of the localization device 402 from the UWB anchors. In addition, in such an embodiment, the localization engine 424 implemented in the personal communications device 406 performs a second functionality, in which the UWB timing data is used to determine the location of the localization device 402. In such an embodiment, the localization device 402 may also perform a third functionality, in which the localization device 402 uses the location determined by the localization engine 424 to determine a function to be performed. In addition, other uses of the location may be possible.

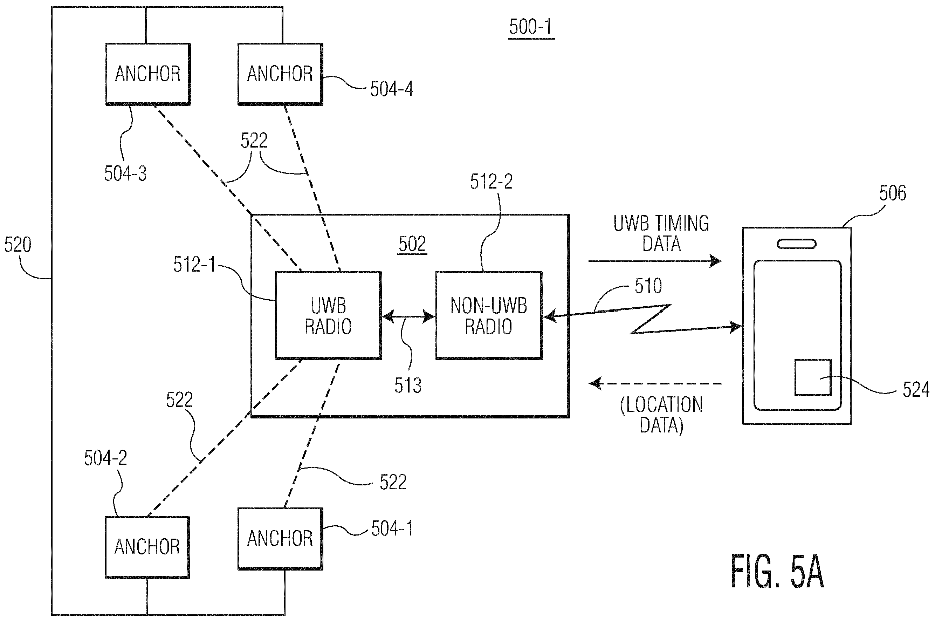

Examples of an RTLS where distribution of the functionalities needed for wireless localization are enabled by a UWB radio and by a non-UWB radio are described in further detail below with reference to Figs. 5A - 5B.

Fig. 5A depicts an example of an RTLS, 500-1, where distribution of the functionalities needed for wireless localization are enabled by a UWB radio and by a non-UWB radio in accordance with an embodiment of the invention. The RTLS 500-1 may be similar to the RTLS 200 and the RTLS 400 shown in Fig. 2 and Fig. 4, respectively. In particular, Fig. 5A depicts a localization device 502, UWB anchors (anchor 504-1, anchor 504-2, anchor 504-3, and anchor 504-4), and a localization engine 524 implemented in a personal communications device 506. With reference to Fig. 5A, the localization device 502 may include a UWB radio 512-1 that communicates with the UWB anchors using a UWB wireless protocol (illustrated by dashed lines 522) and anon-UWB radio 512-2 that communicates with the localization engine 524 implemented in the personal communications device 506 using a non-UWB wireless protocol (illustrated by arrow 510) (e.g., LTE, BLE, Wi-Fi, cellular, etc.).

In an embodiment, the UWB anchors (e.g., anchor 504-1, anchor 504-2, anchor 504-3, and anchor 504-4) may each be connected via a network 520 and may be used by the UWB radio 512-1 of the localization device 502 to obtain UWB timing data from the UWB anchors via at least one blink packet. In some embodiments, the at least one blink packet may be transmitted by the UWB anchors to the UWB radio 512-1 of the localization device 502 using the UWB wireless protocol. For example, each of the UWB anchors may transmit a blink packet that includes information corresponding to the respective UWB anchor. In an embodiment, the localization device 502 has an interface (illustrated by arrow 513) (e.g., SPI, I2C, or other types of interfaces) configured to provide the UWB timing data to the non-UWB radio 512-2 from the UWB radio 512-1, such that the UWB timing data (illustrated as UWB timing data) may be transmitted via the non-UWB radio 512-2 of the localization device 502 to the localization engine 524 implemented in the personal communications device 506 using the non-UWB wireless protocol. In an embodiment, the localization engine 524 implemented in the personal communications device 506 may then determine a location of the localization device 502 using the UWB timing data. As an example, the location determined by the localization engine 524 may indicate the location of the personal communications device 506 relative to the localization device 502. As another example, the location determined by the localization engine 524 may indicate an absolute location of the localization device 502.

In one embodiment, the personal communications device 506 may use the location of the localization device 502 to determine a function to be performed. For example, the personal communications device 506 may display the location of the localization device 502 via a UI or a GUI. In such an embodiment, when the personal communications device 506 uses the location of the localization device 502 to determine the function to be performed, the remote localization device implemented in the personal communications device may not transmit location data (illustrated as location data) to the non-UWB radio 512-2 of the localization device 502 in response to the UWB timing data transmitted by the non-UWB radio 512-2.

In another embodiment, the personal communications device 506 may not use the location of the localization device 502 to determine a function to be performed. In such an embodiment, when the personal communications device 506 does not use the location of the localization device 502 to determine the function to be performed, the remote localization device implemented in the personal communications device may transmit location data (illustrated as location data) to the non-UWB radio 512-2 of the localization device 502 in response to the UWB timing data transmitted by the non-UWB radio 512-2. In such an embodiment, the localization engine 524 implemented in the personal communications device 506 may transmit the location data to the non-UWB radio 512-2 of the localization device 502 using the non-UWB wireless protocol (illustrated by arrow 510). As an example, the location data transmitted by the localization engine 524 may indicate the location of the personal communications device 506 relative to the localization device 502. As another example, the location determined by the localization engine 524 may indicate an absolute location of the localization device 502. In an embodiment, the localization device 502 may determine the function to be performed in response to the location data transmitted by the localization engine 524. For example, the functioned to be performed by the localization device 502 may be an unlocking operation or a locking operation. In such an example, the unlocking operation or the locking operation may be performed if the localization engine 524 is brought to a certain location, e.g., near the localization device 502. The unlocking operation or the locking operation may involve, e.g., unlocking/locking a bike, an automotive vehicle, a door, and/or other lock-enabled devices.

With reference to Fig. 5A, when the personal communications device 506 uses the location of the localization device 502 to determine the function to be performed, the functionalities needed for wireless localization may be distributed amongst components of the RTLS 500-1 as described herein. In an embodiment, the localization device 502 performs a first functionality, in which UWB timing data is obtained by the UWB radio 512-1 of the localization device 502 from the UWB anchors. In addition, in such an embodiment, the localization engine 524 implemented in the personal communications device 506 performs a second functionality and a third functionality. According to the second functionality, the localization engine 524 implemented in the personal communications device 506 uses the UWB timing data to determine the location of the localization device 502. According to the third functionality, the personal communications device 506 uses the location determined by the localization engine 524 to display the location of the localization device 502 via the UI or the GUI. In addition, other uses of the location may be possible.

With further reference to Fig. 5A, when the personal communications device 506 does not use the location of the localization device 502 to determine the function to be performed, the functionalities needed for wireless localization may be distributed amongst components of the RTLS 500-1 as described herein. In an embodiment, the localization device 502 performs a first functionality, in which UWB timing data is obtained by the UWB radio 512-1 of the localization device 502 from the UWB anchors. In an embodiment, the localization engine 524 implemented in the personal communications device 506 performs a second functionality, in which the UWB timing data is used to determine the location of the localization device 502. In addition, in an embodiment, the localization device 502 may also perform a third functionality, in which the localization device 502 uses the location determined by the localization engine 524 to determine a function to be performed. In another embodiment, the personal communications device 506 may perform the third functionality, in which the personal communications device 506 uses the location determined by the localization engine 524 to determine the function to be performed. In addition, other uses of the location may be possible.

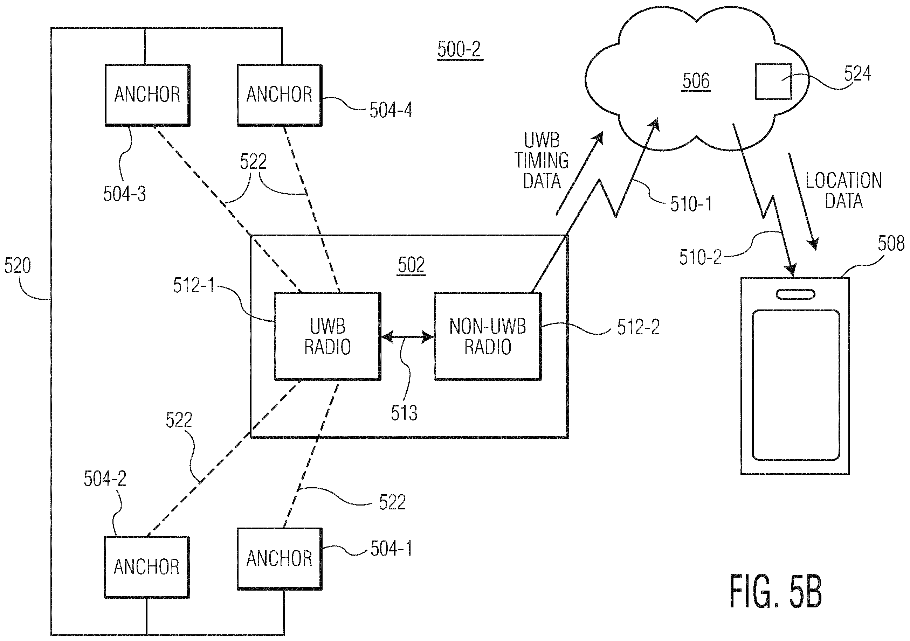

Fig. 5B depicts another example of an RTLS, 500-2, where distribution of the functionalities needed for wireless localization are enabled by a UWB radio and by a non-UWB radio in accordance with an embodiment of the invention. The RTLS 500-2 may be similar to the RTLS 300 shown in Fig. 3. In particular, Fig. 5B depicts a localization device 502, UWB anchors (anchor 504-1, anchor 504-2, anchor 504-3, and anchor 504-4), a localization engine 524 implemented in a server (e.g., cloud-based server) 506, and a personal communications device 508. With reference to Fig. 5B, the localization device 502 may include a UWB radio 512-1 that communicates with the UWB anchors using a UWB wireless protocol (illustrated by dashed lines 522) and a non-UWB radio 512-2 that communicates with the localization engine 524 using a non-UWB wireless protocol (illustrated by arrow 510-1). In addition, the localization engine 524 implemented in the server 506 may communicate with the personal communications device 508 using another non-UWB wireless protocol (illustrated by arrow 510-2). Examples of the non-UWB wireless protocols may include LTE, BLE, Wi-Fi, cellular, and/or some other intermediate proxy such as, for example, a mobile phone.

In an embodiment, the UWB anchors (e.g., anchor 504-1, anchor 504-2, anchor 504-3, and anchor 504-4) may each be connected via a network (e.g., ethernet or Wi-Fi) 520 and may be used by the UWB radio 512-1 of the localization device 502 to obtain UWB timing data from the UWB anchors via at least one blink packet. In some embodiments, the at least one blink packet may be transmitted by the UWB anchors to the UWB radio 512-1 of the localization device 502 using the UWB wireless protocol. For example, each of the UWB anchors may transmit a blink packet that includes information corresponding to the respective UWB anchor. In an embodiment, the localization device 502 has an interface (illustrated by arrow 513) (e.g., SPI, I2C, or other types of interfaces) configured to provide the UWB timing data to the non-UWB radio 512-2 from the UWB radio 512-1, such that the UWB timing data (illustrated as UWB timing data) may be transmitted via the non-UWB radio 512-2 of the localization device 502 to the localization engine 524 implemented in the server 506 using the non-UWB wireless protocol (illustrated by arrow 510-1).

The localization engine 524 implemented in the server 506 may then determine a location of the localization device 502 using the UWB timing data and transmit location data (illustrated as location data) to the personal communications device 508 using the other non-UWB wireless protocol (illustrated by arrow 510-2). As an example, the location data transmitted by the localization engine 524 may indicate the location of the localization device 502 relative to the personal communications device 508. As another example, the location determined by the localization engine 524 may indicate an absolute location of the localization device 502. In an embodiment, the personal communications device 508 may use the location of the localization device 502 to determine a function to be performed. For example, the personal communications device 508 may display the location of the localization device 502 via a UI or a GUI in response to the location data, such that the location may be shown on a map or implemented via another navigational interface.

With reference to Fig. 5B, the functionalities needed for wireless localization are distributed amongst components of the RTLS 500-2 as described herein. In an embodiment, the localization device 502 performs a first functionality, in which UWB timing data is obtained by the UWB radio 512-1 of the localization device 502 from the UWB anchors. In addition, in such an embodiment, the localization engine 524 implemented in the server 506 performs a second functionality, in which the UWB timing data is used to determine the location of the localization device 502. In such an embodiment, personal communications device 508 performs a third functionality, in which the location determined by the localization engine 524 is used by the personal communications device 508 to display the location of the localization device 502 via the UI or the GUI. In addition, other uses of the location may be possible.

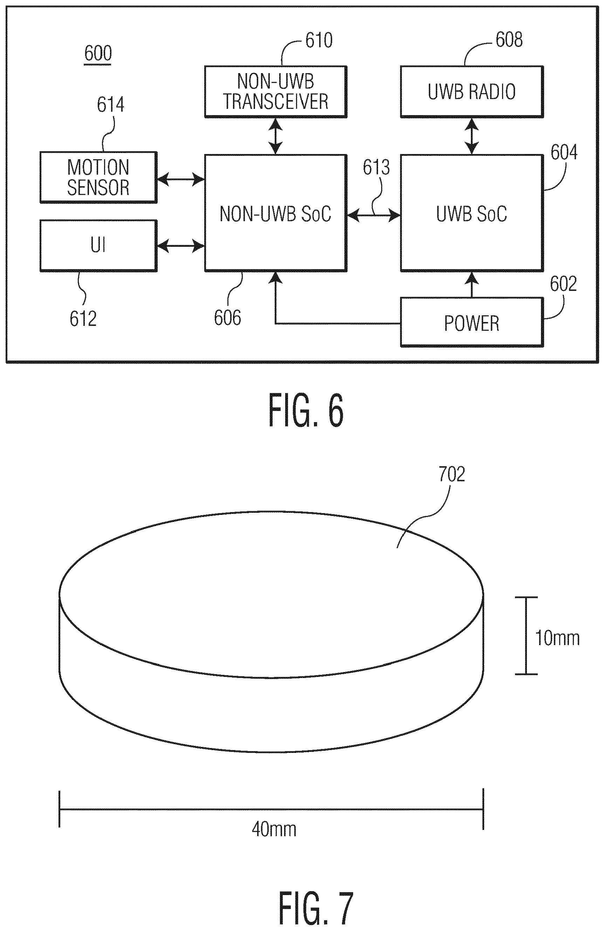

An example of a system that may be used by a localization device in an RTLS for wireless localization is described in further detail below with reference to Fig. 6.

Fig. 6 depicts an example of a system, 600, that may be used by a localization device in an RTLS for wireless localization in accordance with an embodiment of the invention. In particular, Fig. 6 depicts the system 600 as including several components which enable wireless localization in a localization device (e.g., localization device 102, localization device 202, localization device 302, localization device 402, and/or localization device 502) of an RTLS (e.g., RTLS 100, RTLS 200, RTLS 300, RTLS 400, RTLS 500-1, and/or RTLS 500-2). The system 600 shown in Fig. 6 includes a power source (e.g., battery) 602, that is operably coupled to a UWB system-on-chip (SoC) 604 and to a non-UWB SoC 606. In some embodiments, the power source may be an optimized design for a coin cell battery supply.

In an embodiment, the UWB SoC 604 may process MAC functionalities and communicate with a UWB radio 608 and the non-UWB SoC 606, such that information received and/or transmitted by the UWB radio 608 may be provided to and/or from the non-UWB SoC 606 via the UWB SoC 604. In an embodiment, the non-UWB SoC 606 may also process MAC functionalities and communicate with a non-UWB transceiver 610 and with the UWB SoC 606, such that information received and/or transmitted by the non-UWB transceiver 610 may be provided to and/or from the UWB SoC 604 via the non-UWB SoC 606. In an embodiment, the UWB SoC 604 and the non-UWB SoC 606 may communicate using an interface 613. As an example, the interface 613 may be SPI, I2C, or other type of interfaces. In some embodiments, the UWB SoC 604 and the non-UWB SoC 606 may be included in a single chip. In addition, the non-UWB SoC 606 may be operably coupled to a UI 612 and to a motion sensor 614, such that the UI 612 and/or the motion sensor 614 may each be optionally included. Examples of the UI 612 may include light emitting diodes (LEDs), a vibration alert, a GUI, a small display, and/or other types of UIs. In such an embodiment, the motion sensor 614 may be used by the system 600 for an event wake-up function. For example, if the motion sensor 614 detects that the system 600 has moved, then the motion sensor 614 may communicate to the non-UWB SoC 606 for the system 600 to power on.

With reference to Fig. 6, in some embodiments, the UWB radio 608 of the system 600 may include a UWB RF front-end and antenna, such that the UWB radio may communicate with devices (e.g., UWB anchors) using a UWB wireless protocol. In some embodiments, the non-UWB transceiver 610 may be a non-UWB radio, e.g., the non-UWB radio as described in Fig. 2, Fig. 3, Fig. 4, and/or Figs. 5A - 5B. For example, the non-UWB transceiver 610 may be a non-UWB radio that includes a non-UWB RF front-end and antenna, such that the non-UWB radio may communicate with other devices (e.g., personal communications devices and/or servers) using a non-UWB wireless protocol. In some embodiments, the non-UWB transceiver 610 may communicate with other devices (e.g., personal communications devices) through use of a Universal Serial Bus (USB), a USB Type-C (USB-C), or other connector systems. In addition, the system 600 may be fully integrated with single transmission/reception fine ranging capabilities.

An example of a localization device that may be used in an RTLS for wireless localization is described in further detail below with reference to Fig. 7.

Fig. 7 depicts an example of a localization device, 702, that may be used in an RTLS for wireless localization in accordance with an embodiment. In particular, Fig. 7 depicts the localization device 702 as having a diameter of 40 mm and a height of 10 mm. However, in some embodiments, the localization device 702 may have a diameter less than 40 mm or greater than 40 mm. In addition, in some embodiments, the localization device 702 may have a height greater than 10 mm or less than 10 mm. In other embodiments, the localization device 702 may be a cube, sphere, or other type of three-dimensional shape. In an embodiment, the localization device 702 may be an enclosed device that includes components (not shown) that enable wireless localization. For example, the localization device 702 may include the system 600 shown in Fig. 6.

With reference to Fig. 7, the localization device 702 may represent, e.g., localization device 202, localization device 302, localization device 402, and/or localization device 502. In some embodiments, the localization device 702 may be integrated with consumer electronic devices (e.g., mobile phones, laptops, smartwatches, wearable tags, shopping carts, etc.) and/or with industrial electronic devices (e.g., mobile industrial equipment, crates, badges, helmets, sensors, etc.). For example, the localization device may be embedded into mobile phones to assist with device tracking services. As another example, the localization device may be embedded into mobile industrial equipment (e.g., forklifts, boom lifts, stackers, tow tractors, etc.) to assist with equipment tracking services.

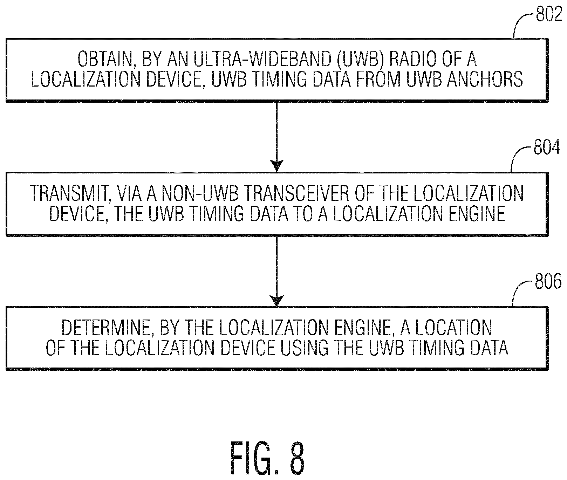

Fig. 8 illustrates a flow diagram of a technique for wireless localization in accordance with an embodiment of the invention. At block 802, a UWB radio of a localization device obtains UWB timing data from UWB anchors. At block 804, a non-UWB transceiver of the localization device transmits the UWB timing data to a localization engine. At block 806, the localization engine determines a location of the localization device using the UWB timing data.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It should also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk. Current examples of optical disks include a compact disk with read only memory (CD-ROM), a compact disk with read/write (CD-R/W), and a digital video disk (DVD).

Alternatively, embodiments of the invention may be implemented entirely in hardware or in an implementation containing both hardware and software elements. In embodiments which use software, the software may include but is not limited to firmware, resident software, microcode, etc.

Although specific embodiments of the invention have been described and illustrated, the invention is not to be limited to the specific forms or arrangements of parts so described and illustrated. The scope of the invention is to be defined by the claims appended hereto and their equivalents.

## Claims

1. A method for wireless localization, the method comprising:
obtaining, by an Ultra-Wideband (UWB) radio of a localization device, UWB timing data from UWB anchors;
transmitting, via a non-UWB transceiver of the localization device, the UWB timing data to a localization engine; and
determining, by the localization engine, a location of the localization device using the UWB timing data.

2. The method of claim 1, wherein the UWB radio of the localization device communicates with the UWB anchors using a UWB wireless protocol and obtains the UWB timing data via at least one blink packet transmitted by the UWB anchors using the UWB wireless protocol.

3. The method of claim 1 or 2, wherein the non-UWB transceiver of the localization device communicates with the localization engine using a non-UWB wireless protocol.

4. The method of any preceding claim, wherein the UWB radio of the localization device communicates with the UWB anchors using a UWB wireless protocol and obtains the UWB timing data via at least one blink packet transmitted by the UWB anchors using the UWB wireless protocol; and
wherein the non-UWB transceiver of the localization device communicates with the localization engine using a non-UWB wireless protocol and transmits the UWB timing data to the localization engine using the non-UWB wireless protocol.

5. The method of any preceding claim, wherein the localization engine is implemented in a personal communications device that displays the location of the localization device via at least one of a user interface (UI) and a graphical user interface (GUI).

6. The method of any one of claims 1 to 4, wherein the localization engine is implemented in a server that transmits location data to a personal communications device; and
wherein the personal communications device displays the location of the localization device via at least one of a UI and a GUI in response to the location data.

7. The method of any preceding claim, wherein the localization engine transmits location data to the non-UWB transceiver of the localization device in response to the UWB timing data transmitted by the localization device; and
wherein the localization device determines a function to be performed in response to the location data transmitted by the localization engine.

8. The method of claim 7, wherein the function to be performed by the localization device is at least one of an unlocking operation and a locking operation.

9. A localization device, the localization device comprising:
an Ultra-Wideband (UWB) radio configured to obtain UWB timing data from UWB anchors;
a non-UWB transceiver configured to transmit the UWB timing data to a localization engine that can determine a location of the localization device in response to the UWB timing data; and
means for providing the UWB timing data to the non-UWB transceiver from the UWB radio.

10. The localization device of claim 9, wherein the UWB radio of the localization device communicates with the UWB anchors using a UWB wireless protocol and obtains the UWB timing data via at least one blink packet transmitted by the UWB anchors using the UWB wireless protocol.

11. The localization device of claim 9 or 10, wherein the non-UWB transceiver of the localization device communicates with the localization engine using a non-UWB wireless protocol.

12. The localization device of any one of claims 9 to 11, wherein the UWB radio of the localization device communicates with the UWB anchors using a UWB wireless protocol and obtains the UWB timing data via at least one blink packet transmitted by the UWB anchors using the UWB wireless protocol; and
wherein the non-UWB transceiver of the localization device communicates with the localization engine using a non-UWB wireless protocol and transmits the UWB timing data to the localization engine using the non-UWB wireless protocol.

13. The localization device of any one of claims 9 to 12, wherein the localization engine is implemented in a personal communications device that displays the location of the localization device via at least one of a user interface (UI) and a graphical user interface (GUI).

14. The localization device of any one of claims 9 to 12, wherein the localization engine is implemented in a server that transmits location data to a personal communications device; and
wherein the personal communications device displays the location of the localization device via at least one of a UI and a GUI in response to the location data.

15. The localization device of any one of claims 9 to 14, wherein the localization engine transmits location data to the non-UWB transceiver of the localization device in response to the UWB timing data transmitted by the localization device; and
wherein the localization device determines a function to be performed in response to the location data transmitted by the localization engine.
